# EUROPÄISCHE PATENTSCHRIFT

(11) **EP 2 746 030 B1**
(45) Veröffentlichungstag und Bekanntmachung des Hinweises auf die Patenterteilung: **23.03.2016**
(21) Anmeldenummer: 13199205.9
(22) Anmeldetag: 20.12.2013
(51) Int. Cl.: B29C 49/42, B29C 49/64, B29C 49/46, B29C 49/28, B29C 49/36

(54) **Teilungsverzugsstern zum Transportieren von Kunststoffbehältnissen**
Delayed division star for conveying plastic containers
Étoile réductrice pour le transport de récipients en matière synthétique

(30) Priorität: 21.12.2012 DE 102012112946
(43) Veröffentlichungstag der Anmeldung: 25.06.2014
(73) Patentinhaber: Krones AG, 93073 Neutraubling (DE)
(72) Erfinder: Laumer, Roland, 93073 Neutraubling (DE); Attenhauser, Michael, 93073 Neutraubling (DE)
(74) Vertreter: Bittner, Bernhard

(56) Entgegenhaltungen:
- EP-A1- 2 412 651
- EP-A2- 2 444 232
- WO-A2-01/44084
- DE-A1-102011 101 255

## Beschreibung

Die vorliegende Erfindung bezieht sich auf eine Vorrichtung zum Transportieren von Behältnissen und insbesondere von Kunststoffbehältnissen. Aus dem Stand der Technik sind derartige Vorrichtungen seit langem bekannt. Auch ist es dabei bekannt, derartige Transporteinrichtungen beispielsweise einzusetzen, um Kunststoffvorformlinge innerhalb einer Blasformmaschine von einer Erwärmungseinrichtung, wie beispielsweise einem Ofen, zu einer Umformungseinrichtung, wie beispielsweise einem Blasrad, zu transportieren. Bei diesen Transporten ist es vorteilhaft, wenn eine Teilung zwischen den transportierten Kunststoffbehältnissen verändert werden kann. Unter Kunststoffbehältnissen können sowohl Kunststoffvorformlinge als auch Kunststoffflaschen verstanden werden.

So beschreibt beispielsweise die DE 10 2008 038 141 eine aseptische Behälterbehandlungsanlage. Dabei werden Kunststoffvorformlinge sterilisiert und unter sterilen Bedingungen zu Kunststoffbehältnissen umgeformt. Zum Zwecke der Zu- und Abführung der Kunststoffbehältnisse an die Behandlungsanlage ist es erforderlich, die Abstände der Behältnisse untereinander zu verändern. Zwar sind beispielsweise aus der DE 10 2007 011 060 A1 derartige Teilungsverzugssterne bekannt, diese weisen jedoch den Nachteil auf, dass sie für eine sterile Streckblasmaschine aufgrund der verwendeten Bauteile und der mechanischen Einleitungen der Bewegungen nur schlecht geeignet sind. Weiterhin sind diese Transporteinrichtungen auch nur schwer von Kontaminationen zu reinigen bzw. zu sterilisieren. Weitere nahestehende Vorrictungen und Verfahren aus dem Stand der Technik sind in den Dokumenten EP-A-2444232, DE102011-101255 und WO01/44084 beschrieben.

Der vorliegenden Erfindung liegt daher die Aufgabe zugrunde, eine Transporteinrichtung zum Transportieren von Behältnissen zur Verfügung zu stellen, welche sich insbesondere auch für aseptische Anwendungen eignet. Diese Aufgaben werden erfindungsgemäß durch die Gegenstände der unabhängigen Ansprüche gelöst.

Vorteilhafte Ausführungsformen und Weiterbildungen sind Gegenstand der Unteransprüche.

Eine erfindungsgemäße Vorrichtung zum Transportieren von Kunststoffbehältnissen weist einen um eine vorgegebene Drehachse drehbaren Träger auf, an dem eine Vielzahl von Halteelementen zum Halten der Kunststoffbehältnisse angeordnet ist. Weiterhin weist die Vorrichtung einen Reinraum auf, der zumindest den Transportpfad der Kunststoffbehältnisse umgibt, wobei dieser Reinraum mittels wenigstens einer Wandung gegenüber einer unsterilen Umgebung abgegrenzt ist. Weiterhin sind die einzelnen Halteelemente gegenüber dem Träger bewegbar, um einen Abstand zweier unmittelbar hintereinander angeordneter Halteelemente zueinander zu verändern. Weiterhin ist jedem Halteelement eine Antriebseinrichtung zur Erzeugung einer Bewegung der Halteelemente gegenüber dem Träger zugeordnet.

Erfindungsgemäß weist die Antriebseinrichtung ein erstes Antriebselement zum Erzeugen einer ersten Bewegung mit einer ersten Bewegungsrichtung auf sowie ein zweites Antriebselement zum Erzeugen einer zweiten Bewegung mit einer zweiten Bewegungsrichtung, wobei sich die erste Bewegungsrichtung und die zweite Bewegungsrichtung voneinander unterscheiden. Dabei wäre es möglich, dass es sich bei beiden Bewegungen beispielsweise um Schwenkbewegungen handelt, jedoch in diesem Falle insbesondere um Schwenkbewegungen mit unterschiedlichen Winkeln bzw. unterschiedlichen Radien, oder auch um Schwenkbewegungen bezüglich unterschiedlicher Schwenkachsen, wobei jedoch bevorzugt diese Schwenkachsen zueinander parallel sind.

Allgemein wird unter einer Bewegungsrichtung eine beliebige Bewegungsrichtung im Raum verstanden und insbesondere ist die Bewegungsrichtung aus einer Gruppe von Bewegungsrichtungen ausgewählt ist, welche lineare Bewegungen in einer vorgegebenen Richtung, Bewegungen entlang einer kreis(segment)förmigen Bahn, Bewegungen entlang einer elliptischen Bahn und dergleichen enthält. So werden beispielsweise eine Bewegung entlang einer Kreisbahn und eine lineare Bewegung als unterschiedliche Bewegungen aufgefasst. Auch werden Bewegungen entlang von Kreisbahnen mit unterschiedlichen Radien als unterschiedliche Bewegungen aufgefasst. Allgemein kann daher anstelle des Begriffes der Bewegungsrichtung auch der Begriff der Bewegungsbahn verwendet werden, d.h. die von der ersten Antriebseinrichtung erzeugte Bewegungsbahn unterscheidet sich von der von der zweiten Antriebseinrichtung erzeugten Bewegungsbahn. Entscheidend sind also insbesondere nicht (nur) bestimmte (End)punkte der Bewegung sondern die Bahn bzw. der Verlauf zwischen diesen (End)punkten.

Dabei ist es möglich, dass das erste Antriebselement unabhängig von dem zweiten Antriebselement ansteuerbar ist. Bei der erwähnten Drehachse, bezüglich derer der Träger drehbar ist, handelt es sich insbesondere um eine vertikale bzw. auf den Erdmittelpunkt zulaufende Drehachse. Daher werden die Behältnisse insbesondere in einer horizontalen Ebene transportiert. Es wäre jedoch auch denkbar, dass die Drehachse geringfügig, beispielsweise um bis zu 5° gegenüber dieser vertikalen Richtung geneigt ist.

Vorteilhaft umgibt der Sterilraum den Transportpfad der Kunststoffbehältnisse kanalartig. Dabei ist es möglich, dass der Träger, oder ein Teil des Trägers ebenfalls eine der besagten Wandungen, welche den Sterilraum begrenzen, ausbildet. Vorteilhaft ist eine Antriebseinrichtung, welche den Träger zu dessen Drehbewegung antreibt, außerhalb des Sterilraums bzw. Reinraums angeordnet. Vorteilhaft handelt es sich bei dieser Antriebseinrichtung um einen Elektromotor.

Vorteilhaft weist die Vorrichtung eine Druckbeaufschlagungseinrichtung auf, um den Sterilraum mit einem Überdruck gegenüber einem Umgebungsdruck zu beaufschlagen.

Vorteilhaft handelt es sich bei den Halteelementen um Greifklammern, welche die Behältnisse beispielsweise unterhalb deren Tragring oder in einem Bereich zwischen dem Tragring und dem Gewinde greifen. Die Halteelemente können jedoch auch als Dorne ausgebildet sein, welche in Mündungen der zu transportierenden Behältnisse einführbar sind. Vorteilhaft handelt es sich bei den Halteelementen um steuerbare Halteelemente, d.h. um Halteelemente, die zwischen einer ersten Stellung, in welcher sie die Behältnisse greifen können und einer zweiten Stellung, in der die Behältnisse nicht gegriffen oder losgelassen werden, schaltbar sind.

Bei einer weiteren vorteilhaften Ausführungsform sind beide Antriebselemente aus einer Gruppe von Antriebselementen ausgewählt, welche elektromotorische Antriebselemente, pneumatische Antriebselemente, hydraulische Antriebselemente und dergleichen enthält.

Vorteilhaft ist die durch das erste Antriebselement erzeugte Bewegung mit der durch das zweite Antriebselement erzeugten Bewegung gekoppelt, derart, dass sich eine Bewegung des Halteelements auch aus einer Überlagerung dieser Bewegungen ergibt.

Bevorzugt wird also die Bewegung der Halteelemente auch durch eine Kopplung der beiden insbesondere motorischen Antriebe bewirkt. Auf diese Weise können nahezu beliebige Punkte innerhalb eines vorgegebenen Transportpfads der Behältnisse angefahren werden.

Vorteilhaft wird der Reinraum bzw. Sterilraum mit einem temperierten Gasgemisch aus Wasserstoffperoxid und Luft sterilisiert. Eine Reinigung ist nicht zwingend vor jeder Sterilisation - insbesondere der Kunststoffvorformlinge - erforderlich. Die Kunststoffbehältnisse, bei denen es sich insbesondere um Kunststoffvorformlinge handelt, werden vorteilhaft zwischen einem Ofen und einem Blasrad mittels wenigstens zwei, bevorzugt mittels drei Behandlungssternen transportiert und/oder ggf. sterilisiert. Insbesondere ist zwischen dem Ofen und dem Blasrad eine weitere Vorrichtung vorgesehen, die die Kunststoffvorformlinge durch Beaufschlagung mit Wasserstoffperoxid bzw. einem Wasserstoffperoxid-Luftgemisch oder Elektronenstrahlung sterilisiert.

Bei einer weiteren vorteilhaften Ausführungsform wird der Reinraum mit filtrierter Luft beaufschlagt, so dass ein Überdruck zu der umgebenden Atmosphäre gewährleistet ist. Eine vorteilhafte Behältnisproduktion wird beispielsweise durch die Druckverhältnisse p1>p2>pₐₜgewährleistet. Dabei bezeichnet der Wert p1 einen Druck innerhalb eines Umformungseinrichtung zum Umformen der Kunststoffvorformlinge zu den Kunststoffbehältnissen, der Wert p2 einen Druck im Bereich der erfindungsgemäßen Transporteinrichtung und der Wert einen atmosphärischen Druck in der Umgebung. Das Belüftungsgerät kann dabei auch andere Reinräume von Maschinen, wie beispielsweise einer Füllmaschine, einer Verschlussmaschine oder auch parallel aufgestellte Anlagen, versorgen. Bevorzugt ist die Prozesstechnik in Kombination mit anderen Maschinen der Behältnisbehandlung kombiniert.

Zur Reinigung der Vorrichtung können dabei sowohl bewegliche als auch stationäre Reinigungselemente wie Reinigungsdüsen vorgesehen sein. Bei der Reinigung der Vorrichtung mit einem flüssigen Medium wäre es auch möglich, einen Druck zwischen dem Reinraum und dem jeweiligen Antriebselement anzulegen, der kleiner ist, als ein Druck in benachbarten Bereichen des Reinraums wie beispielsweise eine Umformungseinrichtung, um so zu verhindern, dass das Reinigungsmedium auch in benachbarte Anlagenteile gelangt. Auch könnte ein Druck zumindest während der Reinigung unter einem atmosphärischen Druck gehalten werden.

Bei einer weiteren vorteilhaften Ausführungsform ist wenigstens ein Antriebselement wenigstens teilweise außerhalb des Reinraums angeordnet. Vorteilhaft sind die beiden Antriebe steuerungstechnisch miteinander gekoppelt. Dies bedeutet, dass sie zwar unabhängig voneinander ansteuerbar sind, dabei eine Steuerungseinrichtung das eine Antriebselement auch in Abhängigkeit von der Bewegung des anderen Antriebselements steuert. Vorteilhaft werden die Antriebselemente vollautomatisch durch eine entsprechende Steuerung gesteuert.

Bei einer weiteren vorteilhaften Ausführungsform ist wenigstens ein Antriebselement wenigstens teilweise außerhalb des Reinraums angeordnet. Dabei ist es möglich und bevorzugt, dass das Antriebselement geometrisch außerhalb des Reinraums angeordnet ist. Es wäre jedoch auch möglich, dass das Antriebselement geometrisch innerhalb des Reinraums angeordnet ist, dort jedoch beispielsweise in einem gekapselten bzw. abgeschlossenen Gehäuse angeordnet ist. Vorteilhaft wird eine Bewegung der Antriebselemente durch eine Sterilraumgrenze des Reinraums bzw. eine den Reinraum begrenzende Wandung hindurch übertragen. Bei einer weiteren Ausführungsform ist wenigstens ein Antriebselement vollständig außerhalb des Reinraums angeordnet. Bei einer weiteren bevorzugten Ausführungsform sind beide Antriebselemente wenigstens teilweise und bevorzugt vollständig außerhalb des Reinraums angeordnet.

So können beispielsweise Linearantriebe mittels Faltenbälgen von dem Sterilraum abgetrennt werden. Weiterhin wäre es möglich, zur Abdichtung der Drehbewegung des Trägers ein sog. Wasserschloss einzusetzen, welches einen umlaufenden, mit Flüssigkeit gefüllten Kanal aufweist, in den ein weiteres Element, wie etwa ein Schwert eintaucht, um so eine Abdichtung des Reinraums zu bewirken.

Daneben wäre es möglich, dass Steuereinrichtungen für die einzelnen Antriebselemente, wie etwa Umrichter und dergleichen vorgesehen sind. Derartige Steuereinrichtungen können beispielsweise in Gehäusen untergebracht sein, welche bevorzugt auf dem Träger der Vorrichtung angeordnet sind und sich damit um die Hauptachse der Vorrichtung drehen, d.h. diejenige Drehachse, bezüglich derer alle Halteeinrichtungen drehbar sind. An dieser Hauptachse kann ein Zahnrad zu deren Antrieb angeordnet sein. Es wäre jedoch auch möglich, dass die Hauptachse bzw. Hauptwelle mittels eines Hohlwellenmotors angetrieben wird.

Bevorzugt befinden sich Elemente der Antriebselemente wie etwa die Motoren, deren Kabel und/oder deren Umrichter außerhalb des Reinraums.

Wie oben erwähnt, können die Antriebselemente auch als Schwenkantriebe ausgeführt sein. Dabei ist es möglich, dass sich ein Magnetfeld des jeweiligen Antriebselements nur teilweise um die Nebenachsen erstreckt.

Durch eine Abschottung der Antriebe von einer sterilen Atmosphäre kann auf viele bewegte Bauteile innerhalb des Sterilraums verzichtet werden. Auch wird der Wartungsaufwand minimiert und auf eine Schmierung innerhalb der Sterilgrenze kann verzichtet werden. Die erfindungsgemäße Vorrichtung kann beispielsweise eingesetzt werden, um einen Abstand der Behältnisse zu verändern und eine begleitende Übergabe zwischen den einzelnen Behandlungsmaschinen zu ermöglichen. Darüber hinaus kann mit der Transporteinrichtung, die insbesondere als (Teilungs)verzugsstern ausgebildet ist, eine schnelle Übergabe zwischen einer Erwärmungseinrichtung bzw. einem Ofen und einer Blasstation gewährleistet werden. Auf diese Weise kann ein Temperatureinfluss auf die Mündung des Behältnisses und somit eine unerwünschte Verformung dieses Mündungsabschnitts der Behältnisse verhindert werden.

Vorzugsweise kann dabei vor einem Produktionsbeginn die Anlage sterilisiert bzw. gereinigt werden. Auch ist es möglich, dass nach der Produktion der Behältnisse der Reinraum beispielsweise mit Lauge oder über eine oder mehrere Spritzdüsen und/oder Rotationsköpfe gereinigt wird und anschließend mit Wasser, vorzugsweise Wasser mit Trinkwasserqualität gespült wird. Daneben kann anschließend der Bereich noch getrocknet werden und die Anlage alsdann in einen Ruhezustand versetzt werden.

Dabei ist es möglich, dass vor einem Wiederanfahren der Vorrichtung eine Sterilisation der Vorrichtung selbst bzw. deren Elemente vorgenommen wird. Vorteilhaft werden die besagten zu sterilisierenden Elemente im Rahmen dieser Sterilisation erwärmt. Dabei ist es möglich, dass die Transportvorrichtung ein Rohrsystem aufweist, in welches temperierte Luft eingeleitet werden kann. Nach dieser Erwärmung kann die Vorrichtung trockensterilisiert werden, beispielsweise mit Wasserstoffperoxid.

Bei einer bevorzugten Ausführungsform weist die erfindungsgemäße Vorrichtung eine Reinigungseinrichtung zum Reinigen der Transportvorrichtung auf, um insbesondere eine sogenannte CIP (cleaning in place) Reinigung durchzuführen.

Bei einer weiteren vorteilhaften Ausführungsform weist die Vorrichtung wenigstens eine Dichtungseinrichtung auf, mittels der die Übertragung der von wenigstens einem Antriebselement erzeugten Bewegung in das Innere des Gehäuses abdichtbar ist. So kann beispielsweise ein Faltenbalg vorgesehen sein, der eine Bewegung eines Antriebselements bevorzugt auch in verschiedenen Antriebsrichtungen ermöglicht.

Bei einer weiteren vorteilhaften Ausführungsform erzeugt wenigstens ein Antriebselement eine Schwenkbewegung des Halteelements gegenüber dem Träger. Dabei ist es möglich, dass das Halteelement um einen vorgegebenen Winkel, beispielsweise um einen Winkel von 180°, schwenkbar ist. Vorteilhaft ist dabei die Schwenkung des Halteelements bezüglich dem Träger bezüglich einer Achse gegeben, welche parallel zu der Drehachse des Trägers ist.

Bei einer weiteren vorteilhaften Ausführungsform weist die Vorrichtung ein Kopplungselement auf, welches die von dem ersten Antriebselement erzeugte Bewegung mit der von einem zweiten Antriebselement erzeugten Bewegung koppelt. So kann beispielsweise das erste Antriebselement einen Ausleger antreiben und auf diesem Ausleger kann wiederum das zweite Antriebselement angeordnet sein. Auch wäre es möglich, dass die beiden Antriebselemente auf ein gemeinsames Element wirken und so durch eine Bewegung beider Antriebselemente die Stellung dieses Elementes eingestellt bzw. verändert werden kann.

Weiterhin ist es möglich, dass es sich bei den Antriebselementen um elektrische Antriebselemente, wie beispielsweise Elektromotoren, handelt und dabei die Motoren selbst, bevorzugt auch deren Kabel und etwaige Umrichter außerhalb des Reinraums angeordnet sind.

Daneben ist es auch möglich, dass wenigstens eine, bevorzugt mehrere und besonders bevorzugt alle Lagerelemente von dem Reinraum durch Abdichtungen abgetrennt sind. Daneben wäre es auch möglich, dass elektrische Verbindungen, wie insbesondere Kabel, auch durch Hohlwellen geführt werden. Dabei ist es möglich, dass die jeweiligen Hohlräume dieser Wellen, obwohl sie geometrisch innerhalb des Reinraums liegen, unsteril sind.

Bei einer weiteren vorteilhaften Ausführungsform ist wenigstens ein Antriebselement ein Rotationsantrieb oder ein Linearantrieb. Dabei ist es möglich, dass zwei Rotationsantriebe vorgesehen sind, es wäre möglich, dass zwei Linearantriebe vorgesehen sind und es wäre auch möglich, dass ein Rotations- und ein Linearantrieb vorgesehen sind. Dabei ist es möglich, dass der Linearantrieb eine Bewegung erzeugt, welche senkrecht zu der Drehachse des Trägers ist. Bevorzugt ist dabei diese Bewegung in einer radialen Richtung des Trägers, wobei es auch denkbar ist, dass die Bewegung senkrecht zu dieser radialen Richtung des Trägers und auch senkrecht zu der Drehachse des Trägers ist.

Die vorliegende Erfindung ist weiterhin auf eine Anordnung zum Behandeln von Kunststoffbehältnissen gerichtet, welche eine erste Behandlungseinheit aufweist, welche die Kunststoffbehältnisse in einer ersten vorgegebenen Weise behandelt. Weiterhin weist die Anordnung eine in einer Transportrichtung der Kunststoffbehältnisse auf diese erste Behandlungseinheit folgende zweite Behandlungseinheit auf, wobei zwischen der ersten Behandlungseinheit und der zweiten Behandlungseinheit eine Vorrichtung der oben beschriebenen Art angeordnet ist, welche die Kunststoffbehältnisse von der ersten Behandlungseinheit zu der zweiten Behandlungseinheit transportiert.

Dabei ist es beispielsweise möglich, dass die erste Behandlungseinheit eine Innensterilisation der Behältnisse vornimmt und die zweite Behandlungseinheit eine Außensterilisation. Vorteilhaft erstreckt sich der Reinraum der Transporteinrichtung auch auf wenigstens eine der beiden Behandlungseinheiten, insbesondere wenigstens auf die der Transporteinrichtung nachgeordnete Behandlungseinheit und besonders bevorzugt auf beide Behandlungseinheiten. Dabei ist es möglich, dass die Sterilisationseinheiten Strahlungseinrichtungen aufweisen, welche die Behältnisse mit Strahlung, beispielsweise Elektronenstrahlung, UV-Strahlung, Röntgenstrahlung oder dergleichen beaufschlagen. Es wäre jedoch auch eine Sterilisation mit Medien wie Wasserstoffperoxid oder Peressigsäure möglich. Dabei ist es weiterhin möglich, dass die Sterilisationseinrichtung eine Vielzahl von an einem Träger angeordnete Strahlfinger aufweist, welche in die Behältnisse eingeführt werden können.

So ist es beispielsweise möglich, dass die hier beschriebene Transporteinrichtung für unterschiedliche Behältnisbehandlungseinrichtungen und -maschinen vorgesehen ist, wie beispielsweise Behandlungsmaschinen zur Sterilisation der Behältnisse oder Sortieranlagen. Allgemein ist eine oben beschriebene Transporteinrichtung bei solchen Anwendungen geeignet, bei denen es zweckmäßig ist, den Abstand der Kunststoffvorformlinge bzw. Kunststoffbehältnisse, insbesondere zwischen Rundläufer, Behälterbehandlungsmaschinen zu ändern. So kann es sich beispielsweise bei der Anordnung um einen Sterilisator handeln, der zunächst Kunststoffvorformlinge mittels Elektronenstrahlung sterilisiert. Hier ist ein relativ kleiner Abstand von beispielsweise 50 mm zwischen den einzelnen Kunststoffvorformlingen vorteilhaft, um deren Außenbehandlung durchzuführen. Zur Innenbehandlung sollte baulich bedingt der Abstand auf wenigstens 100 mm vergrößert werden. Auch wäre es möglich, die erfindungsgemäße Transporteinrichtung zum Wechseln von Formen in einer Streckblasmaschine zu verwenden.

Die vorliegende Erfindung bezieht sich weiterhin auf ein Verfahren zum Behandeln von Kunststoffbehältnissen. Dabei werden die Kunststoffbehältnisse mittels einer ersten Behandlungseinheit in einer ersten vorgegebenen Weise behandelt und die Kunststoffbehältnisse werden anschließend mittels einer Transporteinrichtung vereinzelt zu einer zweiten Behandlungseinheit transportiert, wobei die Kunststoffbehältnisse mit einer Vielzahl von an einem drehbaren Träger der Transporteinrichtung angeordneten Halteeinrichtungen gehalten werden und die Kunststoffbehältnisse von dieser zweiten Behandlungseinheit in einer zweiten Weise behandelt werden, welche sich bevorzugt von der ersten Weise unterscheidet. Weiterhin werden die Kunststoffbehältnisse während ihres Transports mit der Transporteinrichtung innerhalb eines Reinraums transportiert und dieser Reinraum wird mittels wenigstens einer Wandung gegenüber einer unsterilen Umgebung abgegrenzt.

Erfindungsgemäß wird während des Transports der Kunststoffbehältnisse mit der Transporteinrichtung ein Abstand zwischen zwei aufeinander folgenden Kunststoffbehältnissen in der Transporteinrichtung verändert. Mit anderen Worten wird auch verfahrensseitig vorgeschlagen, dass während des Transportes von der ersten Behandlungseinheit zu der zweiten Behandlungseinheit eine Teilung zwischen den Kunststoffbehältnissen verändert bzw. vergrößert wird. Vorteilhaft handelt es sich bei den Kunststoffbehältnissen um Kunststoffvorformlinge.

Vorteilhaft wird wenigstens ein Kunststoffbehältnis während seines Transports gegenüber dem drehbaren Träger geschwenkt bzw. bewegt. Vorteilhaft wird diese Bewegung der Kunststoffbehältnisse mittels zweier der betreffenden Halteeinrichtungen zugeordneten Antrieben erzeugt. Vorteilhaft handelt es sich hierbei um motorische Antriebe und insbesondere um elektromotorische Antriebe. Durch die Verwendung von elektromotorischen Antrieben kann insbesondere eine flexible Einstellung der benötigten Teilung bzw. Abstände zwischen den Kunststoffbehältnissen erreicht werden.

Bei einem weiteren vorteilhaften Verfahren wird diese Relativbewegung zwischen den Halteeinrichtungen und deren Träger bzw. deren Antriebselementen abgedichtet. Auf diese Weise kann die Halteeinrichtung bzw. das Halteelement mit dem daran angeordneten Behältnis sich selbst permanent innerhalb des Reinraums befinden und der ihr zugeordnete Antrieb bzw. das Antriebselement selbst kann sich außerhalb des Reinraums befinden. Vorteilhaft werden damit die Kunststoffbehältnisse während ihres Transports mit der Transporteinrichtung abschnittsweise auf einem kreisförmigen Transportpfad bewegt.

Vorteilhaft nimmt wenigstens eine der beiden Behandlungseinheiten einen Sterilisationsvorgang und/oder einen Reinigungsvorgang an den Kunststoffbehältnissen vor. Vorteilhaft nimmt auch die andere Behandlungseinheit einen Sterilisationsvorgang an den Behältnissen vor. Daneben kann es sich jedoch auch um andere Behandlungseinheiten handeln, beispielsweise eine Erwärmungseinheit, welche die Kunststoffvorformlinge erwärmt, eine Umformungseinheit, wie etwa eine Streckblasmaschine, welche die Kunststoffvorformlinge zu Kunststoffflaschen umformt, eine Spüleinrichtung, eine Befüllungseinrichtung, eine Etikettierungseinrichtung oder dergleichen.

Weitere Vorteile und Ausführungsformen ergeben sich aus den beigefügten Zeichnungen.

Darin zeigen:
- Fig. 1: Ein Beispiel für eine Anlage mit einer erfindungsgemäßen Transportvorrichtung;
- Fig. 2: eine erfindungsgemäße Transportvorrichtung in einer ersten Ausführungsform;
- Fig. 3: eine erfindungsgemäße Transportvorrichtung in einer zweiten Ausführungsform;
- Fig. 4: eine erfindungsgemäße Transportvorrichtung in einer dritten Ausführungsform;
- Fig. 5: eine erfindungsgemäße Transportvorrichtung in einer vierten Ausführungsform; und
- Fig. 6: eine Veranschaulichung zur Darstellung einer Abdichtung.

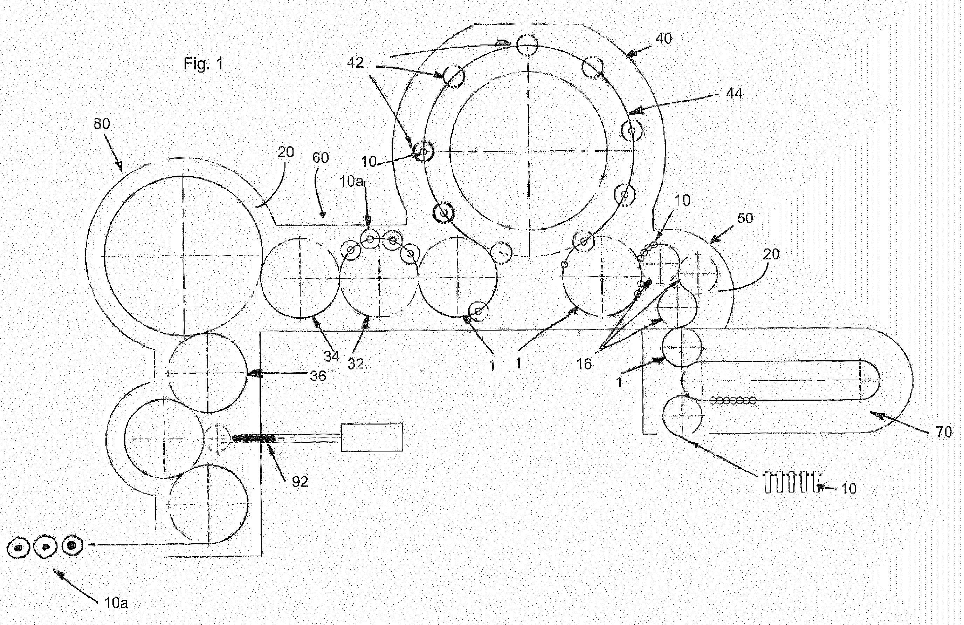

Fig. 1 zeigt eine erfindungsgemäße Anlage 100, genauer eine Aseptikanlage für die Herstellung von Kunststoffbehältnissen und die Abfüllung von Flüssigkeiten, wie beispielsweise Getränke, in diese Behältnisse. Diese Anlage 100 weist dabei eine Streckblasmaschine 40 auf, welche einen drehbaren Träger 44 aufweist, bzw. ein Blasrad 44, an dem eine Vielzahl von Umformungsstationen 42 angeordnet ist. Diese Blasstationen weisen dabei einen vorbestimmten Abstand in Umfangsrichtung zueinander auf. Die Umformungsstationen 42 können dabei einerseits durch die Anbringung an einem Blasrad 44 rotieren oder andererseits auch stationär angeordnet sein.

Der Umformungseinrichtung 40 ist eine in ihrer Gesamtheit mit 50 gekennzeichnete Behandlungseinheit, genauer eine Sterilisationseinheit, vorgeschaltet. Diese Sterilisationseinheit 50 weist hier drei Transporteinrichtungen bzw. Behandlungssterne 16 auf, welche die Kunststoffvorformlinge bzw. die Kunststoffbehältnisse 10 während ihrer Sterilisierung transportieren. Damit erfolgt hier eine Sterilisation der Kunststoffbehältnisse vor dem eigentlichen Blasvorgang bzw. Umformungsvorgang.

Daneben weist die Anlage hier drei erfindungsgemäße Transportvorrichtungen 1 auf. Dabei ist eine dieser Transportvorrichtungen 1 am Eingang der Umformungseinrichtung 40 angeordnet, eine weitere Vorrichtung 1 ist am Ausgang der Umformungsvorrichtung 40 angeordnet und eine dritte Vorrichtung 1 ist zwischen einer Erwärmungseinrichtung 70 zum Erwärmen der Kunststoffvorformlinge und der Sterilisationseinheit 50 angeordnet. Auf diese Weise kann beispielsweise eine Teilung zwischen den Kunststoffvorformlingen 10 vor und nach der Umformungseinrichtung 40 durchgeführt werden.

Die Kunststoffvorformlinge 10 werden der Erwärmungsvorrichtung 70 zugeführt und dort auf eine Umformungstemperatur, das heißt auf eine Temperatur, bei der ein Umformungsprozess durchgeführt werden können, erwärmt. In der Umformungseinrichtung 40 werden die Kunststoffvorformlinge durch Beaufschlagung mit Blasluft zu den Kunststoffbehältnissen expandiert. Zu diesem Zweck weisen die einzelnen Umformungsstationen 42 jeweils Blasformen auf, die auseinander- und zusammengeklappt werden können, um die Kunststoffvorformlinge in einem durch die Blasformen ausgebildeten Hohlraum aufnehmen zu können und um die Kunststoffvorformlinge gegen die Wandungen dieser Blasformen zu expandieren.

An diese Umformungsvorrichtung 40 schließt sich eine weitere Sterilisationseinheit 60 an, die ebenfalls mehrere Transportsterne 32, 34 aufweisen kann. Im Rahmen dieser zweiten Sterilisationseinheit werden die nunmehr fertiggestellten Kunststoffbehältnisse vor ihrer Befüllung sterilisiert. Dabei ist es möglich, dass diese Sterilisationseinheit Strahlfinger aufweist, die in das Innere der nunmehr gefertigten Kunststoffbehältnisse einführbar sind. Daneben kann auch hier eine Sterilisation der Kunststoffbehältnisse mittels eines Sterilisationsmediums, wie beispielsweise Wasserstoffperoxid oder Peressigsäure erfolgen. Daneben könnten auch noch weitere Sterilisationseinheiten und/oder Transferbereiche vorgesehen sein.

Das Bezugszeichen 80 bezieht sich auf eine Fülleinrichtung, welche die fertiggestellten Behältnisse mit einer Flüssigkeit befüllt. Man erkennt, dass die gesamte Behandlung der Kunststoffvorformlinge bis hin zu dem Füllvorgang in einem Reinraum 20 stattfindet. Daher ist insbesondere auch die Umformungseinrichtung 40 zum Umformen der Kunststoffvorformlinge in Kunststoffbehältnisse als aseptische Anlage ausgeführt, welche eine Expansion der Kunststoffvorformlinge zu den Kunststoffbehältnissen unter sterilen Bedingungen ermöglicht. Der Reinraum 20 erstreckt sich damit auch im Bereich dieser Umformungseinrichtung 40. In dieser sterilen Umformungseinrichtung 40 werden damit die vortemperierten Kunststoffvorformlinge zu den fertigen Behältnissen 10a ausgeformt.

Nach dem Befüllen der Behältnisse können diese noch mit sterilisierten Verschlüssen 92 verschlossen werden. Am Ende der Anlage wird das bevorzugt ebenfalls aseptisch abgefüllte Produkt in den nunmehr verschlossenen Behältnissen 10a ausgegeben.

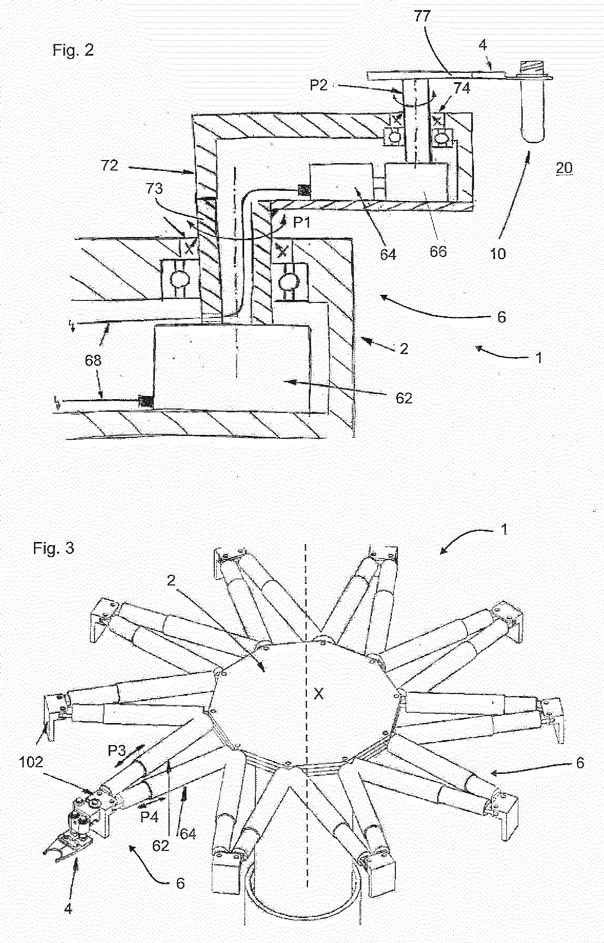

Fig. 2 zeigt eine erste Ausführungsform einer erfindungsgemäßen Transportvorrichtung 1. Diese Transporteinrichtung führt hier zwei rotatorische Bewegungen (Pfeile P1 und P2) durch, wobei diese beiden Drehungen hier hintereinander geschaltet sind und so ein Anfahren von beliebigen Punkten innerhalb eines Kreises um eine erste Drehachse (bezüglich deren der Träger 2 drehbar ist) ermöglichen, wobei dieser erste Kreis einen Radius aufweist, der vorzugsweise so groß ist, wie die beiden Radien der in Fig. 2 gezeigten Schwenkarme 72, 77 in Summe.

In dem sich bevorzugt konstant drehenden Träger 2 ist ein erstes Antriebselement 62 bzw. ein Motor angeordnet, der wiederum den Schwenkarm bzw. Ausleger 72 schwenkt. Innerhalb dieses Auslegers 72 ist das zweite Antriebselement 64 angeordnet, das über ein Getriebe 66 an einem zweiten Ausleger schwenkt, bzw. dreht, wobei an diesen zweiten Ausleger 77 wieder das Halteelement 4 zum Halten des Kunststoffvorformlings angeordnet ist. In der in Fig. 2 gezeigten Ausführungsform werden die einzelnen Stromzuführungsleitungen 68 jeweils im Inneren der Konstruktion verlegt bzw. werden beispielsweise durch eine Welle 73, welche zum Schwenken des Auslegers 72 dient, geführt. Daneben können auch Dichtelemente vorgesehen sein, welche die jeweiligen Signalleitungen 68 gegenüber dem Reinraum 20 abdichten. Das Bezugszeichen 6 bezieht sich auf die Antriebseinrichtung in ihrer Gesamtheit, zu deren Bestandteilen unter anderem die beiden Antriebselemente 62 und 64 zählen.

Fig. 3 zeigt eine weitere Ausführungsform einer erfindungsgemäßen Transportvorrichtung. Bei dieser Ausführungsform werden Linearantriebe 62 und 64 vorgesehen, welche hier jeweils bevorzugt als pneumatische oder hydraulische Antriebe ausgebildet sind. An den Enden der jeweils von diesen Antriebselementen 62 und 64 bewegten Elementen ist ein Kopplungselement 102 angeordnet, welches damit durch eine entsprechende Ansteuerung der beiden Antriebselemente 62 und 64 geschwenkt werden kann. Das Halteelement 4 ist an dieser Koppeleinrichtung 102 angeordnet. Dabei ist es möglich, dass die beiden Antriebselemente 62 und 64 wiederum an dem Träger 2 angelenkt sind, bzw. schwenkbar gegenüber diesem Träger 2 sind.

Das Bezugszeichen 6 kennzeichnet auch hier eine Antriebseinrichtung in ihrer Gesamtheit. Man erkennt, dass das Koppelelement 102 wiederum gelenkig bzw. schwenkbar mit den beiden Antriebselementen 62 und 64 verbunden ist. Damit sind hier die Bewegungsrichtungen der beiden Antriebselemente 62 und 64 im Wesentlichen parallel kombiniert und ermöglichen sowohl ein Ausfahren als auch ein Schwenken des Behältnisses 10. Durch ein Einstellen verschiedener Längen der beiden Antriebselemente 62 und 64 kann auch eine Schwenkverschiebung sowie auch ein Ausfahren ermöglicht werden. Die Pfeile P3 und P4 kennzeichnen diese Bewegungen.

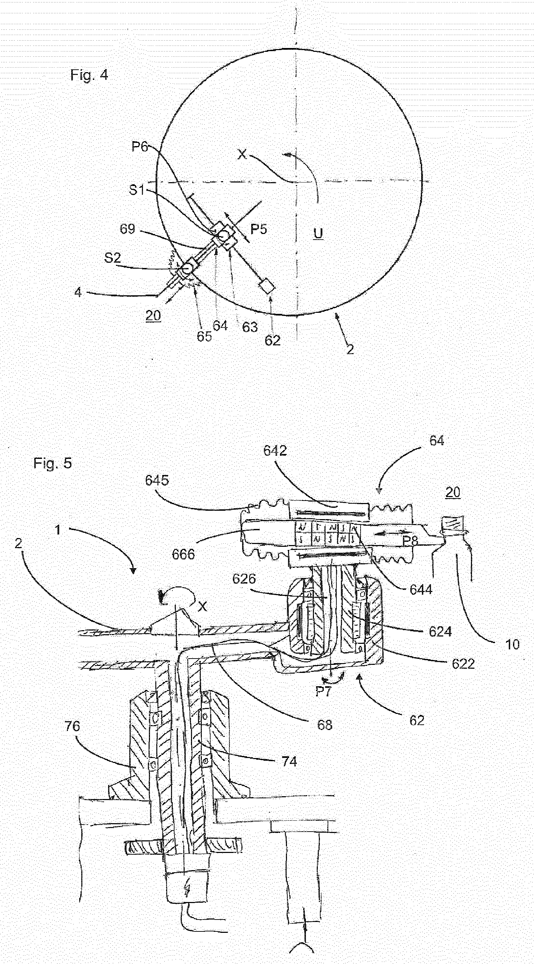

Fig. 4 zeigt eine weitere Ausführungsform einer erfindungsgemäßen Vorrichtung 1, wobei auch hier zwei lineare Antriebselemente 62 und 64 miteinander kombiniert sind. Auch hier ist das eigentliche Halteelement 4 in dem Reinraum 20 angeordnet und die Antriebe bzw. Antriebselemente 62 und 64 sind außerhalb des Reinraums angeordnet, wobei hier eine Dichtungseinrichtung, wie ein Faltenbalg 65 eingesetzt wird, um den Reinraum gegenüber der Umgebung U abzudichten. Daneben wäre es auch möglich, dass die Antriebselemente 62 und 64 innerhalb eines Gehäuses angeordnet sind und auf diese Weise gegenüber dem Reinraum abgeschirmt sind. Das erste Antriebselement 62 verschiebt einen Schlitten 63 in Richtung des Pfeils P5. Auf diesem Schlitten 63 ist drehbar gelagert das zweite Antriebselement 64 angeordnet. Auch dieses Antriebselement 64 ist in einem Gehäuse gegenüber der Umgebung angeordnet. Das Bezugszeichen 65 bezieht sich auf den Faltenbalg zur luft- und chemikaliendichten Abdichtung. Durch eine Verschiebung des Schlittens 63 ergibt sich auch eine Schwenkbewegung des zweiten Antriebselements 64. Eine Schubbewegung bzw. eine Bewegung in der radialen Richtung des Pfeils P6 wird durch das zweite Antriebselement 64 erreicht. Auch auf diese Weise kann eine beliebige Positionierung der Halteeinrichtung 4 erreicht werden.

Das Bezugszeichen S1 bezieht sich auf eine Schwenkachse, bezüglich derer der Ausleger 69 mit der Halteeinrichtung 4 gegenüber dem Schlitten 63 schwenkbar ist. Das Bezugszeichen S2 bezieht sich auf eine weitere Schwenkachse, bezüglich derer der Ausleger 69 gegenüber dem Träger 2 schwenkbar ist. Da der Faltenbalg 65 ortsfest an dem Träger 2 angeordnet ist, kann durch ein Zusammenspiel der linearen Bewegungen in Verbindung mit den Schwenkungen um diese beiden Schwenkachsen auch eine beliebige Positionierung der Halteeinrichtung 4 gegenüber dem Träger 2 erreicht werden (in durch die Auslenkungen der jeweiligen Antriebselemente 62 und 64 vorgegebenen Grenzen).

Bei der in Fig. 5 gezeigten Ausführungsform der erfindungsgemäßen Transporteinrichtung ist eine Drehbewegung mit einer Linearbewegung gekoppelt. Bei dieser Ausführungsform ist zunächst der Träger bzw. die Transporteinrichtung 2 drehbar mittels einer Lagerung 76 und einer Welle 74 gelagert. An dem Träger 2 ist eine Vielzahl von ersten Antriebselementen 62 angeordnet, welche wiederum eine Drehbewegung einer Welle 624 bewirken (Pfeil P7). Das Bezugszeichen 622 bezieht sich auf ein Tragelement dieses ersten Antriebs 62, welches hier auch gleichzeitig der Stator eines Elektromotors ist. Das Bezugszeichen 626 kennzeichnet einen Hohlraum, durch welchen durch wiederum die Leitungen zur Bestromung und Steuerung des zweiten Antriebselements 64 geführt sind. Dieses zweite Antriebselement 64 ist hier ein Linearantrieb, der einen Stator 642 aufweist, sowie ein bezüglich des Pfeils P8 bewegbares bzw. verschiebbares Sekundärteil, welches somit für eine lineare Bewegung sorgt. Das Bezugszeichen 645 kennzeichnet wieder eine Dichtungseinrichtung wie einen Faltenbalg, der eine Abdichtung gegenüber dem Reinraum 20 ermöglicht. An dem Sekundärteil 666 ist eine Vielzahl von Magneten 644 angeordnet, wobei hier jeweils die Nord- und Südpole durch die Kürzel N und S dargestellt sind.

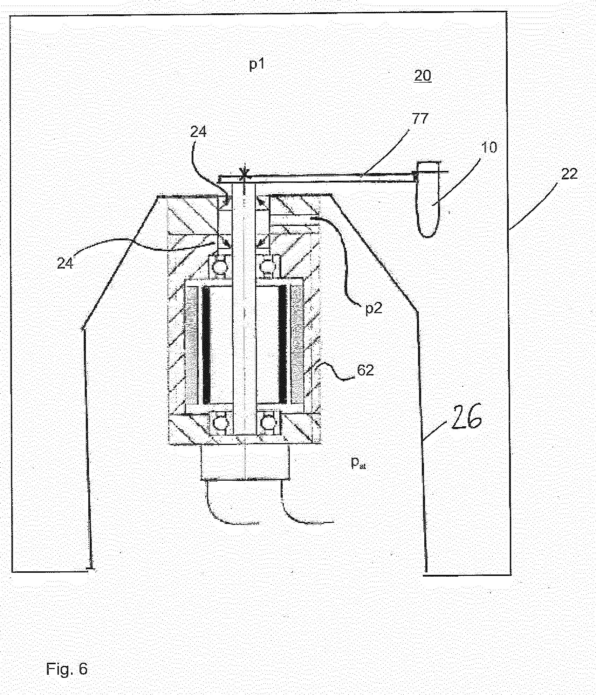

Fig. 6 zeigt eine Darstellung zur Veranschaulichung der Abdichtung, wobei hier lediglich ein Antriebselement 62 dargestellt ist, welches eine Schwenkbewegung erzeugt. Das Bezugszeichen 22 kennzeichnet eine Wandung, welche den Reinraum 20 begrenzt. Das Antriebselement ist hier vollständig außerhalb des Reinraums 20 angeordnet und dabei innerhalb eines Gehäuses 26 vorgesehen, welches damit ebenfalls den Reinraum begrenzt. Innerhalb dieses Gehäuses herrscht ein Druck pₐₜ.

Innerhalb dieses Reinraums 20 herrscht ein Druck p1, der höher liegt als ein atmosphärischer Druck. Das Bezugszeichen 24 kennzeichnet Dichtungseinichtungen wie etwa eine Gleitringdichtung. Ein Bereich zwischen den beiden Dichtungseinrichtungen wird mit einem Druck p2 beaufschlagt, der kleiner ist als der Druck p1 in dem Reinraum, aber größer als der atmosphärische Druck pₐₜ.

Bevorzugt wird daher der Reinraum 20 auch unter Verwendung wenigstens dreier unterschiedlicher Drücke aufrecht erhalten. Der Druck p2 bewirkt, dass keine unreine Luft in den Bereich zwischen den Dichtungseinrichtungen gelangen kann. Da jedoch der Druck p2 kleiner ist als der Druck p1, kann auch kein gasförmiges Medium von dem Bereich zwischen den Dichtungseinrichtungen 24 in den Reinraum 20 gelangen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Transportvorrichtungen
- 2: Träger
- 4: Halteelement, Halteeinrichtung
- 6: Antriebseinrichtung
- 10: Kunststoffvorformlinge/Kunststoffbehältnisse
- 10a: fertige Behältnisse
- 16: Behandlungssterne
- 20: Reinraum
- 22: Wandung
- 24: Dichtungseinrichtung
- 26: Gehäuse
- 32, 34: Transportsterne
- 40: Streckblasmaschine/Umformungseinrichtung
- 42: Umformungsstationen
- 44: drehbarer Träger/Blasrad
- 50: Sterilisationseinheit
- 60: weitere Sterilisationseinheit
- 62: erstes Antriebselement
- 63: Schlitten
- 64: zweites Antriebselement
- 65: Faltenbalg
- 66: Getriebe
- 68: Signalleitungen

- 70: Erwärmungseinrichtung
- 72: Schwenkarme
- 73,74: Wellen
- 76: Lagerung
- 77: Schwenkarm
- 80: Fülleinrichtung
- 92: Verschlüsse
- 100: Aseptikanlage
- 102: Kopplungselement
- 622: Tragelement
- 624: Welle
- 626: Hohlraum
- 642: Stator
- 644: Magnete
- 645: Dichtungseinrichtung
- 666: Sekundärteil

- U: Umgebung
- N: Nordpol
- S: Südpol
- S1, S2: Schwenkachsen
- P1 - P8: die Bewegungen anzeigende Pfeile
- p1, p2, pₐₜ: Drücke

## Patentansprüche

1. Vorrichtung (1) zum Transportieren von Kunststoffbehältnissen (10) mit einem um eine vorgegebenen Drehachse (X) drehbaren Träger (2), an dem eine Vielzahl von Halteelementen (4) zum Halten der Kunststoffbehältnisse (10) angeordnet ist, mit einem Reinraum (20), der zumindest den Transportpfad der Kunststoffbehältnisse (10) umgibt, wobei dieser Reinraum (20) mittels wenigstens einer Wandung gegenüber einer unsterilen Umgebung abgegrenzt ist, wobei die einzelnen Halteelemente (4) gegenüber dem Träger (2) bewegbar sind, um einen Abstand zweier unmittelbar hintereinander angeordneter Halteelemente (4) zueinander zu verändern und wobei jedem Halteelement (4) eine Antriebseinrichtung (6) zur Erzeugung dieser Bewegung der Halteelemente gegenüber dem Träger (2) zugeordnet ist,
**dadurch gekennzeichnet, dass**
die Vorrichtung als Teilungsverzugsstern ausgebildet ist und die Antriebseinrichtung ein erstes Antriebselement (62) zum Erzeugen einer ersten Bewegung mit einer ersten Bewegungsrichtung aufweist sowie ein zweites Antriebselement (64) zum Erzeugen einer zweiten Bewegung mit einer zweiten Bewegungsrichtung, wobei sich die erste Bewegungsrichtung und die zweite Bewegungsrichtung voneinander unterscheiden.

2. Vorrichtung (1) nach Anspruch 1,
**dadurch gekennzeichnet, dass**
beide Antriebselemente aus einer Gruppe von Antriebselementen (62,64) ausgewählt sind, welche elektromotorische Antriebselemente, pneumatische Antriebselemente, hydraulische Antriebselemente und dergleichen enthält.

3. Vorrichtung (1) nach Anspruch 1,
**dadurch gekennzeichnet, dass**
das erste Antriebselement (62) unabhängig von dem zweiten Antriebselement (64) steuerbar ist.

4. Vorrichtung (1) nach wenigstens einem der vorangegangenen Ansprüche,
**dadurch gekennzeichnet, dass**
die durch das erste Antriebselement (62) erzeugte Bewegung mit der durch das zweite Antriebselement (64) erzeugten Bewegung gekoppelt ist, derart, dass sich eine Bewegung des Halteelements aus einer Überlagerung dieser Bewegungen ergibt.

5. Vorrichtung (1) nach wenigstens einem der vorangegangenen Ansprüche,
**dadurch gekennzeichnet, dass**
wenigstens ein Antriebselement (62, 64) wenigstens teilweise außerhalb des Reinraums angeordnet ist.

6. Vorrichtung (1) nach wenigstens einem der vorangegangenen Ansprüche,
**dadurch gekennzeichnet, dass**
die Vorrichtung (1) wenigstens eine Dichtungseinrichtung aufweist, mittels der die Übertragung der von wenigstens einem Antriebselement erzeugten Bewegung in das Innere des Reinraums (20) abdichtbar ist.

7. Vorrichtung (1) nach wenigstens einem der vorangegangenen Ansprüche,
**dadurch gekennzeichnet, dass**
wenigstens ein Antriebselement (62, 64) eine Schwenkbewegung des Halteelements (4) gegenüber dem Träger (2) erzeugt.

8. Vorrichtung (1) nach wenigstens einem der vorangegangenen Ansprüche,
**dadurch gekennzeichnet, dass**
die Vorrichtung (1) ein Kopplungselement aufweist, welches die von dem ersten Antriebselement (62) erzeugte Bewegung mit der von dem zweiten Antriebselement erzeugten Bewegung koppelt.

9. Vorrichtung (1) nach wenigstens einem der vorangegangenen Ansprüche,
**dadurch gekennzeichnet, dass**
wenigstens ein Antriebselement (62, 64) ein Rotationsantrieb oder ein Linearantrieb ist.

10. Anordnung zum Behandeln von Kunststoffbehältnissen, mit einer ersten Behandlungseinheit (50), welche die Kunststoffbehältnisse (10) in einer ersten vorgegebenen Weise behandelt, einer in einer Transportrichtung der Kunststoffbehältnisse (10) auf diese erste Behandlungseinheit (50) folgende zweite Behandlungseinheit (60), wobei zwischen der ersten Behandlungseinheit (50) und der zweiten Behandlungseinheit (60) eine Vorrichtung (1) nach wenigstens einem der vorangegangenen Ansprüche angeordnet ist, welche die Kunststoffbehältnisse (10) von der ersten Behandlungseinheit (50) zu der zweiten Behandlungseinheit (60) transportiert.

11. Verfahren zum Behandeln von Kunststoffbehältnissen, wobei die Kunststoffbehältnisse (10) mittels einer ersten Behandlungseinheit (50) in einer ersten vorgegebenen Weise behandelt werden und wobei die Kunststoffbehältnisse (10) mittels einer Transporteinrichtung (1) vereinzelt zu einer zweiten Behandlungseinheit (60) transportiert werden, wobei die Kunststoffbehältnisse mit einer Vielzahl von an einem drehbaren Träger (2) der Transporteinrichtung (1) angeordneten Halteelementen (4) gehalten werden und die Kunststoffbehältnisse (10) von dieser zweiten Behandlungseinheit (60) in einer zweiten Weise behandelt werden, welche sich von der ersten Weise unterscheidet, wobei die Kunststoffbehältnisse (10) während ihres Transports mit der Transporteinrichtung (1) innerhalb eines Reinraums (20) transportiert werden und dieser Reinraum (20) mittels wenigstens einer Wandung gegenüber einer unsterilen Umgebung abgegrenzt wird,
**dadurch gekennzeichnet, dass**
die Vorrichtung als Teilungsverzugsstern ausgebildet ist und während des Transports der Kunststoffbehältnisse (10) mit der Transporteinrichtung (1) ein Abstand zwischen zwei aufeinanderfolgenden Kunststoffbehältnissen (10) in der Transportrichtung verändert wird.

## Claims

1. Apparatus (1) for transporting plastics material containers (10), comprising a carrier (2) which can rotate about a predefined axis of rotation (X) and on which there is arranged a plurality of holding elements (4) for holding the plastics material containers (10), comprising a clean chamber (20) which surrounds at least the transport path of the plastics material containers (10), wherein this clean chamber (20) is delimited from an unsterile surrounding environment by means of at least one wall, wherein the individual holding elements (4) are movable relative to the carrier (2) in order to vary a spacing between two holding elements (4) arranged directly behind one another, and wherein each holding element (4) is assigned a drive device (6) for generating this movement of the holding elements relative to the carrier (2), **characterized in that** the apparatus is configured as a pitch-varying starwheel and the drive device has a first drive element (62) for generating a first movement having a first movement direction and a second drive element (64) for generating a second movement having a second movement direction, wherein the first movement direction and the second movement direction differ from one another.

2. Apparatus (1) according to claim 1, **characterized in that** both drive elements are selected from a group of drive elements (62, 64) that includes electromotive drive elements, pneumatic drive elements, hydraulic drive elements and the like.

3. Apparatus (1) according to claim 1, **characterized in that** the first drive element (62) can be controlled independently of the second drive element (64).

4. Apparatus (1) according to at least one of the preceding claims, **characterized in that** the movement generated by the first drive element (62) is coupled to the movement generated by the second drive element (64) in such a way that a movement of the holding element results from a superposition of these movements.

5. Apparatus (1) according to at least one of the preceding claims, **characterized in that** at least one drive element (62, 64) is arranged at least partially outside of the clean chamber.

6. Apparatus (1) according to at least one of the preceding claims, **characterized in that** the apparatus (1) has at least one sealing device, by means of which the transmission of the movement generated by at least one drive element into the interior of the clean chamber (20) can be sealed off.

7. Apparatus (1) according to at least one of the preceding claims, **characterized in that** at least one drive element (62, 64) generates a pivoting movement of the holding element (4) relative to the carrier (2).

8. Apparatus (1) according to at least one of the preceding claims, **characterized in that** the apparatus (1) has a coupling element which couples the movement generated by the first drive element (62) to the movement generated by the second drive element.

9. Apparatus (1) according to at least one of the preceding claims, **characterized in that** at least one drive element (62, 64) is a rotational drive or a linear drive.

10. Arrangement for treating plastics material containers, comprising a first treatment unit (50) which treats the plastics material containers (10) in a first predefined way, and a second treatment unit (60) which follows said first treatment unit (50) in a transport direction of the plastics material containers (10), wherein there is arranged between the first treatment unit (50) and the second treatment unit (60) an apparatus (1) according to at least one of the preceding claims which transports the plastics material containers (10) from the first treatment unit (50) to the second treatment unit (60).

11. Method for treating plastics material containers, wherein the plastics material containers (10) are treated by means of a first treatment unit (50) in a first predefined way, and wherein the plastics material containers (10) are transported individually to a second treatment unit (60) by means of a transport device (1), wherein the plastics material containers are held by a plurality of holding elements (4) arranged on a rotatable carrier (2) of the transport device (1) and the plastics material containers (10) are treated by said second treatment unit (60) in a second way which differs from the first way, wherein the plastics material containers (10) are transported within a clean chamber (20) as they are transported by the transport device (1) and said clean chamber (20) is delimited from an unsterile surrounding environment by means of at least one wall, **characterized in that** the apparatus is configured as a pitch-varying starwheel and a spacing between two successive plastics material containers (10) in the transport direction is varied during the transporting of the plastics material containers (10) by the transport device (1).

## Revendications

1. Installation (1) pour le transport de récipients en matière plastique (10) avec un support (2) rotatif autour d'un axe de rotation (X) défini, sur lequel sont disposés plusieurs éléments de maintien (4) destinés à maintenir les récipients en matière plastique (10), avec un espace stérile (20) entourant au moins le chemin de transport des récipients en matière plastique (10), ledit espace stérile (20) étant délimité par au moins une paroi par rapport à un environnement non stérile, les différents éléments de maintien (4) étant déplaçables par rapport au support (2) pour modifier un espacement entre deux éléments de maintien (4) directement successifs et un dispositif d'entraînement (6) destiné à générer ce déplacement des éléments de maintien par rapport au support (2) étant associé à chaque élément de maintien (4),
**caractérisée en ce que**
ladite installation est réalisée comme étoile réductrice et **en ce que** le dispositif d'entraînement comporte un premier élément d'entraînement (62) destiné à générer un premier déplacement dans une première direction de déplacement et un deuxième élément d'entraînement (64) destiné à générer un deuxième déplacement dans une deuxième direction de déplacement, la première direction de déplacement et la deuxième direction de déplacement étant différentes l'une de l'autre.

2. Installation (1) selon la revendication 1,
**caractérisée en ce que**
les deux éléments d'entraînement sont sélectionnés dans un groupe d'éléments d'entraînement (62, 64) qui comprend des éléments d'entraînement à motorisation électrique, des éléments d'entraînement pneumatique, des éléments d'entraînement hydrauliques et similaires.

3. Installation (1) selon la revendication 1,
**caractérisée en ce que**
le premier élément d'entraînement (62) peut être commandé indépendamment du deuxième élément d'entraînement (64).

4. Installation (1) selon au moins une des revendications précédentes,
**caractérisée en ce que**
le déplacement généré par le premier élément d'entraînement (62) est couplé au déplacement généré par le deuxième élément d'entraînement (64), de telle manière qu'une superposition de ces déplacements entraîne un déplacement de l'élément de maintien.

5. Installation (1) selon au moins une des revendications précédentes,
**caractérisée en ce**
**qu'**au moins un élément d'entraînement (62, 64) est disposé au moins en partie en dehors de l'espace stérile.

6. Installation (1) selon au moins une des revendications précédentes,
**caractérisée en ce que**
ladite installation (1) comporte au moins un dispositif d'étanchéité permettant d'étanchéifier le transfert du déplacement généré par au moins un élément d'entraînement vers l'intérieur de l'espace stérile (20).

7. Installation (1) selon au moins une des revendications précédentes,
**caractérisée en ce**
**qu'**au moins un élément d'entraînement (62, 64) génère un pivotement de l'élément de maintien (4) par rapport au support (2).

8. Installation (1) selon au moins une des revendications précédentes,
**caractérisée en ce que**
ladite installation (1) comporte un élément d'accouplement couplant le déplacement généré par le premier élément d'entraînement (62) au déplacement généré par le deuxième élément d'entraînement.

9. Installation (1) selon au moins une des revendications précédentes,
**caractérisée en ce**
**qu'**au moins un élément d'entraînement (62, 64) est un entraînement rotatif ou un entraînement linéaire.

10. Dispositif de traitement de récipients en matière plastique, avec une première unité de traitement (50) traitant les récipients en matière plastique (10) suivant une première manière définie, une deuxième unité de traitement (60) suivant ladite première unité de traitement (50) dans la direction de transport des récipients en matière plastique (10), une installation (1) selon au moins une des revendications précédentes étant disposée entre la première unité de traitement (50) et la deuxième unité de traitement (60), laquelle transporte les récipients en matière plastique (10) de la première unité de traitement (50) à la deuxième unité de traitement (60).

11. Procédé de traitement de récipients en matière plastique, où les récipients en matière plastique (10) sont traités par une première unité de traitement (50) suivant une première manière définie et où les récipients en matière plastique (10) sont individuellement transportés par un dispositif de transport (1) vers une deuxième unité de traitement (60), les récipients en matière plastique étant maintenus par plusieurs éléments de maintien (4) disposés sur un support (2) rotatif du dispositif de transport (1) et les récipients en matière plastique (10) étant traités par ladite deuxième unité de traitement (60) suivant une deuxième manière différente de la première manière, les récipients en matière plastique (10) étant convoyés à l'intérieur d'un espace stérile (20) pendant leur transport par le dispositif de transport (1) et ledit espace stérile (20) étant délimité par au moins une paroi par rapport à un environnement non stérile,
**caractérisé en ce que**
ladite installation est réalisée comme étoile réductrice et **en ce qu'**un espacement entre deux récipients en matière plastique (10) successifs est modifié dans la direction de transport pendant le convoyage des récipients en matière plastique (10) par le dispositif de transport (1).
